# EUROPÄISCHE PATENTSCHRIFT

(11) **EP 0 747 408 B1**
(45) Veröffentlichungstag und Bekanntmachung des Hinweises auf die Patenterteilung: **08.12.1999**
(21) Anmeldenummer: 96108406.8
(22) Anmeldetag: 28.05.1996
(51) Int. Cl.: C08G 18/08, C08G 18/12, C08G 18/10, C08G 18/66

(54) **Verfahren zur kontinuierlichen Herstellung von Polyurethanharnstoff-Elastomeren**
Process for the continuous production of polyurethane urea elastomers
Procédé pour la préparation en continu d'élastomères de polyuréthane urée

(30) Priorität: 07.06.1995 DE 19520731
(43) Veröffentlichungstag der Anmeldung: 11.12.1996
(73) Patentinhaber: BAYER AG, 51368 Leverkusen (DE)
(72) Erfinder: Kirchmeyer, Stephan, Dr., 51375 Leverkusen (DE); Müller, Hanns-Peter, Dr., 51519 Odenthal (DE); Ullrich, Martin, 51375 Leverkusen (DE); Liesenfelder, Ulrich, 51469 Bergisch Gladbach (DE)

(56) Entgegenhaltungen:
- EP-A- 0 087 817
- EP-A- 0 554 719
- EP-A- 0 571 831
- EP-A- 0 646 610
- DE-A- 2 823 762
- US-A- 4 286 080

## Beschreibung

Die Erfindung betrifft thermoplastische Polyurethanharnstoffelastomere, ein Verfahren zu ihrer Herstellung und ihrer Verwendung.

Thermoplastische Polyurethane (TPU) sind von Bedeutung wegen ihrer charakteristischen Elastomer-Eigenschaften. Unverstärkte Polyurethane umfassen einen Härtebereich von Shore A 75 bis Shore D 75, d.h. von den härteren Thermoplasten bis zu Gummi und Weich-PVC. Für bestimmte Anwendungen (Spielzeug, Haushaltsartikel, Automobile) besteht ein vermehrtes Interesse, Gummi und Weich-PVC durch TPU zu ersetzen, da diese recyclierbar sind, gegenüber Gummi deutlich bessere mechanische Eigenschaften aufweisen und beim Verbrennen keine sauren Produkte ergeben. Man braucht allerdings TPU mit einer Härte von weniger als Shore 75 A mit guten Elastomereigenschaften.

Grundsätzlich ist die Härte von TPU durch das Mengenverhältnis der Einsatzstoffe, das sog. Hart-/Weichsegmentverhältnis (vgl. Houben-Weyl, "Methoden der Organischen Chemie", Band E 20, G. Thieme Verlag 1987, S. 1568-1571) einstellbar, jedoch treten bei weichen TPU Probleme mit der Wärmeformbeständigkeit, mechanischen Eigenschaften und Kälteflexibilität auf. Solche TPU weisen dann mangelhafte Festigkeit auf, neigen zum Kleben und sind beim Spritzguß schwer entformbar. Zudem kristallisieren weiche TPU verhältnismäßig leicht, d.h. ihre Härte steigt innerhalb von Stunden oder Tagen langsam an, so daß sie als Chemiewerkstoffe unbrauchbar sind.

Polyurethanharnstoffe sind Polyurethane mit zusätzlichen Harnstoffgruppen. Weiche Polyurethanharnstoffe weisen in der Regel bessere mechanische und Wärmeeigenschaften auf als weiche Polyurethane. Sie sind jedoch nicht thermoplastisch verarbeitbar.

Eine Ausnahme bilden Polyurethanharnstoffelastomere mit singulären, d.h. nicht paarig auftretenden Harnstoffgruppen. Polyurethanharnstoffelastomere mit singulären Harnstoffgruppen können ausschließlich durch Umsetzung von Isocyanatgruppen mit Wasser hergestellt werden, da bei der Umsetzung von Isocyanatgruppen mit Diaminen grundsätzlich paarige Harnstoffgruppen erzeugt werden. Verfahren zur Herstellung von thermoplastischen Polyurethanharnstoffelastomeren durch Umsetzung von Isocyanatgruppen mit Wasser sind bekannt, aber die Produkte und die Verfahren zu ihrer Herstellung sind nicht befriedigend.

Die thermoplastischen Polyurethanharnstoffelastomere gemäß DE-OS 1 645 003 enthalten Polyharnstoff in Form von Stippen und Inhomogenitäten und sind daher unbrauchbar. Das Verfahren gemäß US-PS 4 049 632 und US-PS 4 062 834 ist zur technischen Durchführung nicht geeignet, da große Mengen an Lösungsmitteln zur Herstellung benötigt werden. Bei der Herstellung der thermoplastischen Polyurethanharnstoffelastomeren gemäß EP-A-21 323 (US-PS 4,286,080) muß das zur Reaktion benötigte Wasser unter so hohem Druck und bei so hohen Temperaturen dosiert werden, daß das Produkt bereits während der Herstellung geschädigt wird. EP-A 646 610 lehrt, das Wasser mit Hilfe von Emulgatoren in das Reaktionsgemisch einzubringen. Nachteilig ist jedoch, daß die Emulgatoren im Produkt verbleibene. Aus DE-OS 2 823 762 geht ein Verfahren zur Herstellung von thermosplastischen Polyurethanen in hintereinander geschatteten Statikmischern hervor.

Ziel der Erfindung ist, thermoplastische Polyurethanharnstoffelastomere, insbesondere mit einer Härte von 75 bis 55 Shore A zur Verfügung zu stellen, welche hervorragende mechanische und thermische Eigenschaften aufweisen und gleichzeitig mit den genannten Nachteilen nicht behaftet sind Ein weiteres Ziel ist, diese thermoplastischen Polyurethanharnstoffelastomere kontinuierlich im technischen Maßstab (also z.B. in Mehrwellenschneckenmaschinen) herzustellen.

Es wurde gefunden, daß man, um thermoplastische Polyurethanharnstoffelastomere mit stark verbesserten Eigenschaften zu erhalten, das Isocyanat mit der gegenüber Isocyanat reaktiven Komponente - einschließlich Wasser - in einem Statikmischer unter Bedingungen mischen muß, unter denen zwischen den beiden Komponenten noch keine Reaktion eintritt, und danach in einem zweiten Statikmischer umsetzen muß.

Dies ist völlig unerwartet, denn die Umsetzung von Isocyanaten mit Wasser ist eine heterogene Reaktion an der Grenzfläche zwischen zwei Phasen. Liegen beide Phasen in Form grober Teilchen vor, dann bilden sich Knoten und Stippen sowie unlöslicher Polyharnstoff. Um dies zu vermeiden, müssen kleine Teilchen gebildet werden, was nur durch Aufbringen großer Scherenergie möglich ist. Beim Wegfall dieser Energie entmischen sich solche Mischungen sehr schnell, d.h. es bilden sich zwei grobteilige Phasen zurück, an deren Phasengrenztläche die Reaktion verläuft. Erfindungsgemäß wird jedoch in der zweiten Stufe, das heißt während der Umsetzung der Isocyanatgruppen mit dem Wasser, keine hohe Scherenergie zur Vermischung der beiden Phasen zur Verfügung gestellt. Dennoch werden homogene Polyurethanhalinstoffelastomere mit verbesserten Eigenschaften erhalten.

Gegenstand der Erfindung ist ein Verfahren zur Herstellung thermoplastischer Polyurethanharnstoffelastomerer, worin man ein oder mehrere Polyisocyanate (A), bevorzugt organische Diisocyanate und eine zerewitinoffaktive Wasserstoffatome aufweisenden Mischung (B) aus
1) 40 bis 85 Äquivalent-% (bezogen auf Isocyanatgruppen in (A)) einer oder mehrerer Verbindungen mit im Mittel mindestens 1,8 zerewitinoffaktiven Wasserstoffatomen und einem Molekulargewicht von 450 bis 10 000, bevorzugt 450 bis 6000, besonders bevorzugt 600 bis 4500,
2) 10 bis 60 Äquivalent-% (bezogen auf Isocyanatgruppen in (A)) Wasser und
3) 0 bis 45 Äquivalent-% (bezogen auf Isocyanatgruppen in (A)) einer oder mehrerer Kettenverlängerungsmittel mit im Mittel mindestens 1,8 zerewitinoffaktiven Wasserstoffatomen und einem Molekulargewicht von 62 bis 400 sowie gegebenenfalls
   0 bis 20 Gew.-% (bezogen auf die Gesamtmenge an thermoplastischem Polyurethanharnstoff) weiterer üblicher Hilfs- und Zusatzstoffe (C)
in einem Statikmischer oder Strahlmischer unter Bedingungen homogen vermischt, bei denen keine Reaktion zwischen (A) und (B) eintritt und danach das Gemisch einem zweiten Statikmischer zuführt, in dem (A) und (B) miteinander reagieren.

Ebenfalls Gegenstand der Erfindung sind die so erhaltenen thermoplastischen Polyurethanharnstoffelastomeren.

Gegenstand der Erfindung ist auch die Verwendung der thermoplastischen Polyurethanharnstoffelastomeren zur Herstellung von Formkörpern, (z.B. durch Form-, Preß- und Spritzguß) wie Platten, Behältern, Geräteteilen, Gehäusen, Rollen, Zahnrädern, Maschinen- und Fahrzeugteilen, Walzen, elastischen Überzügen, Folien, Ummantelungen, Schläuchen, Kathetern, Dichtungen, Profilen, Lagerschalen und Fäden.

Als Isocyanate (A) können aliphatische, cycloaliphatische, araliphatische, aromatische und heterocyclische Polyisocyanate oder beliebige Gemische dieser Polyisocyanate verwendet werden (vgl. Houben-Weyl, "Methoden der Organischen Chemie", Band E 20, "Makromolekulare Stoffe", Georg Thieme Verlag, Stuttgart, New York 1978, S. 1587-1593). Beispiele sind Ethylendiisocyanat, 1,4-Tetramethylendiisocyanat, 1,6-Hexamethylendiisocyanat, 1,12-Dodecandiisocyanat, Cyclobutan-1,3-diisocyanat, Cyclohexan-1,3- und -1,4-diisocyanat sowie beliebige Gemische dieser Isomeren, 1-Isocyanato-3,3,5-trimethyl-5-isocyanatomethyl-cyclohexan, 2,4- und 2,6-Hexahydrotoluylendiisocyanat sowie beliebige Gemische dieser Isomeren, Hexahydro-1,3- und/oder -1,4-phenylendiisocyanat, Perhydro-2,4'- und/oder -4,4'-diphenylmethandiisocyanat, Norbornan-Diisocyanate (z.B. US-PS 3 492 330), 1,3- und 1,4-Phenylendiisocyanat, 2,4- und 2,6-Toluylendiisocyanat sowie beliebige Gemische dieser Isomeren, Diphenylmethan-2,4'- und/oder -4,4'-diisocyanat.

Bevorzugt sind aromatische Diisocyanate, insbesondere die gegebenenfalls alkyl-substituierten Toluylen- und Diphenylmethandiisocyanate, aliphatische Diisocyanate, insbesondere Hexamethylendiisocyanat und cycloaliphatische Diisocyanate wie 1-Isocyanato-3,3,5-trimethyl-5-isocyanatomethylcyclohexan, Perhydro-2,4'- und/oder -4,4'-diphenylmethandiisocyanat.

Gegebenenfalls können auch höherfunktionelle Isocyanate wie Triphenylmethan-4,4',4"-triisocyanat, Polyphenyl-polymethylenpolyisocyanate (z.B. erhalten durch die Anilin-Formaldehyd-Kondensation und anschließende Phosgenierung) sowie die bei der technischen Isocyanatherstellung anfallenden, Isocyanatgruppen aufweisenden Destillationsrückstände, gegebenenfalls gelöst in einem oder mehreren der vorgenannten Polyisocyanate mitverwendet werden. Dabei ist jedoch darauf zu achten, daß eine mittlere Funktionalität von zwei nicht wesentlich überschritten wird, wenn die Polyurethane thermoplastisch verarbeitet werden sollen. Gegebenenfalls müssen Reaktionspartner mit höherer Funktionalität durch Mitverwendung anderer Reaktionspartner mit einer niedrigeren Funktionalität als zwei wieder ausgeglichen werden.

Dafür geeignete monofunktionelle Isocyanate sind z.B. Stearylisocyanat, Cyclohexylisocyanat und Phenylisocyanat.

Zerewitinoff-aktive Verbindungen (Bl) sind Verbindungen mit im Mittel mindestens 1,8 zerewitinoffaktiven Wasserstoffatomen und einem Molekulargewicht von 450 bis 10 000.

Eingeschlossen sind neben Aminogruppen, Thiolgruppen oder Carboxylgruppen aufweisenden Verbindungen insbesondere zwei bis acht, bevorzugt zwei Hydroxylgruppen aufweisende Verbindungen, speziell solche vom Molekulargewicht 450 bis 6000, besonders bevorzugt solche vom Molekulargewicht 600 bis 4500, z.B. Hydroxylgruppen aufweisende Polyester, Polyether, Polycarbonate und Polyesteramide.

Geeignete Polyester sind z.B. Umsetzungsprodukte von mehrwertigen, vorzugsweise zweiwertigen und gegebenenfalls zusätzlich dreiwertigen Alkoholen mit mehrwertigen, vorzugsweise zweiwertigen Carbonsäuren oder deren veresterungsfähigen Derivaten. Die Polycarbonsäuren können aliphatischer, cycloaliphatischer, aromatischer und/oder heterocyclischer Natur sein, z.B. durch Halogenatome, substituiert und/oder ungesättigt sein.

Als Beispiele für solche Carbonsäuren und deren Derivate seien genannt: Bernsteinsäure, Adipinsäure, Phthalsäure, Isophthalsäure, Phthalsäureanhydrid, Tetrahydrophthalsäureanhydrid, Hexahydrophthalsäureanhydrid, Tetrachlorphthalsäureanhydrid, Endo-methylentetrahydrophthalsäureanhydrid, Maleinsäure, Maleinsäureanhydrid, Fumarsäure, dimerisierte und trimerisierte ungesättigte Fettsäuren, gegebenenfalls in Mischung mit monomeren ungesättigten Fettsäuren, Terephthalsäuredimethylester und Terephthalsäurebisglykolester.

Als mehrwertige Alkohole kommen z.B. Ethylenglykol, Propylenglykol-(1,2) und -(1,3), Butylenglykol-(1,4) und -(2,3), Hexandiol-(1,6), Octandiol-(1,8), Neopentylglykol, 1,4-Bis(hydroxymethyl)cyclohexan, Trimethylolpropan, Trimethylolethan, ferner Di-, Tri-, Tetra- und höhere Polyethylenglykole, Di- und höhere Polypropylenglykole sowie Di- und höhere Polybutylenglykole in Frage. Die Polyester können anteilig endständige Carboxylgruppen aufweisen Auch Polyester aus Lactonen, z.B. ε-Caprolacton, oder aus Hydroxycarbonsäuren, z.B. ω-Hydroxycapronsäure, sind einsetzbar. Es können jedoch auch die aus der Fettchemie bekannten hydroxyfunktionellen Polyester wie z.B. Rizinusöl und dessen Umesterungsprodukte verwendet werden.

Geeignete Polyether sind an sich bekannt und können z.B. durch Polymerisation von Epoxiden wie Ethylenoxid, Propylenoxid, Butylenoxid, Styroloxid oder Epichlorhydrin oder von Tetrahydrofuran mit sich selbst, z.B. in Gegenwart von Lewis-Katalysatoren wie Bortrifluorid, oder durch Anlagerung der Epoxide, vorzugsweise von Ethylenoxid und Propylenoxid, gegebenenfalls im Gemisch oder nacheinander, an Startkomponenten mit reaktionsfähigen Wasserstoffatomen wie Wasser, Alkohole, Ammoniak oder Amine, z.B. Ethylenglykol, Propylenglykol(1,3) oder -(1,2), Wasser, 4,4'-Dihydroxydiphenylpropan, Anilin, Ethanolamin oder Ethylendiamin hergestellt werden.

Als Hydroxylgruppen aufweisende Polycarbonate kommen an sich bekannte in Betracht, die z.B. durch Umsetzung von Diolen wie Propandiol-(1,3), Butandiol(1,4) und/oder Hexandiol-(1,6), Diethylenglykol, Triethylenglykol, Tetraethylenglykol oder Thiodiglykol mit Diarylcarbonaten, z.B.Diphenylcarbonat, oder Phosgen hergestellt werden können (DE-OS 1 694 080, 2 221 751).

Geeignete Polyesteramide und Polyamide sind z.B. die aus mehrwertigen gesättigten oder ungesättigten Carbonsäuren bzw. deren Anhydriden und mehrwertigen gesättigten oder ungesättigten Aminoalkoholen, Diaminen, Polyaminen und deren Mischungen gewonnenen, vorwiegend linearen Kondensate.

Ebenfalls geeignet sind Polyhydroxyverbindungen, in welchen hochmolekulare Polyaddukte bzw. Polykondensate oder Polymerisate in feindisperser, gelöster oder pfropfpolymerisierter Form enthalten sind. Solche modifizierten Polyhydroxyverbindungen können z.B. erhalten werden, wenn man die Polyaddition (z.B. Umsetzung von Polyisocyanaten mit aminofunktionellen Verbindungen) bzw. Polykondensation (z.B. von Formaldehyd mit Phenolen und/oder Aminen) in Gegenwart der Hydroxylgruppen aufweisenden Verbindungen ablaufen läßt. Entsprechende Verfahren sind beispielsweise in DE-AS 1 168 075 und 1 126 142, sowie DE-OS 2 324 134, 2 423 984, 2 512 385, 2 513 815, 2 220 796, 2 550 797, 2 550 833, 2 550 862, 2 633 293 und 2 639 254 beschrieben. Es ist aber auch möglich, gemäß US-PS 3 869 413 bzw. DE-OS 2 550 860 eine fertige wäßrige Polymerdispersion mit einer Polyhydroxyverbindung zu vermischen und anschließend aus dem Gemisch Wasser zu entfernen.

Auch durch Vinylpolymerisation modifizierte Polyhydroxylverbindungen, wie sie z.B. durch Polymerisation von Styrol und Acrylnitril in Gegenwart von Polyethern (US-PS 3 383 351, 3 323 093, 3 110 695, DE-AS 1 152 536) oder Polycarbonatpolyolen (DE-PS 1 769 795, US-PS 3 637 909) erhalten werden, sind geeignet. Auch Hydroxylgruppen aufweisende Polybutadiene sind geeignet.

Selbstverständlich können Mischungen der obengenannten Verbindungen mit mindestens zwei gegenüber Isocyanaten reaktionsfähigen Wasserstoffatomen mit einem Molekulargewicht von 400 bis 10 000, z.B. Mischungen von Polyethern und Polyestern, eingesetzt werden.

Zerewitinoff-aktive Verbindungen (B3) - Kettenverlängerungsmittel - besitzen im Mittel mindestens 1,8 zerewitinoffaktive Wasserstoffatome und ein Molekulargewicht von 62 bis 400. Hierunter versteht man neben Aminogruppen, Thiolgruppen oder Carboxylgruppen aufweisenden Verbindungen solche mit zwei bis acht, bevorzugt zwei Hydroxylgruppen.

Beispiele für Verbindungen (B3) sind Di- und Polyole wie Ethylenglykol, Propylenglykol-(1,2) und -(1,3), Butylenglykol-(1,4) und -(2,3), Pentandiol-(1,5), Hexandiol-(1,6), Octandiol-(1,8), Neopentylglykol, 1,4-Bis(hydroxymethyl)cyclohexan, 2-Methyl-1,3-propandiol, Glycerin, Trimethylolpropan, Hexantriol-(1,2,6), Trimethylolethan, und Pentaerythrit, Di-, Tri-, Tetra- und höhere Polyethylenglykole mit einem Molekulargewicht bis 400, sowie Di- und höhere Polypropylenglykole mit einem Molekulargewicht bis 400, 4,4'-Dihydroxydiphenylpropan, Di(hydroxymethyl)hydrochinon, Ethanolamin, Diethanolamin, N-Methyldiethanolamin, Triethanolamin und 3-Aminopropanol; aliphatische Diamine wie z.B. Ethylendiamin, 1,4-Tetramethylendiamin, Hexamethylendiamin, sowie deren Gemische, 1-Amino-3,3,5-trimethyl-5-aminomethylcyclohexan ("Isophorondiamin"), 2,4- und 2,6-Hexahydrotoluylendiamin sowie deren Gemische, Perhydro-2,4'- und -4,4'-diaminodiphenylmethan, p-Xylylendiamin und Bis-(3-aminopropyl)methylamin; aromatische Diamine seien Bisanthranilsäureester, 3,5- und 2,4-Diaminobenzoesäureester, 3,3'-Dichlor-4,4'-diamino-diphenylmethan, Tolylendiamin und 4,4'-Diaminodiphenylmethan.

Gegenüber Isocyanaten monofunktionelle Verbindungen können in Anteilen bis zu 2 Gew.-%, bezogen auf thermoplastisches Polyurethanharnstoffelastomer, als Kettenabbrecher mitverwendet werden. Geeignet sind z.B. Monoamine wie Butyl- und Dibutylamin, Octylamin, Stearylamin, N-Methylstearylamin, Pyrrolidin, Piperidin und Cyclohexylamin, Monoalkohole wie Butanol, 2-Ethylhexanol, Octanol, Dodecanol, die verschiedenen Amylalkohole, Cyclohexanol und Ethylenglykolmonomethylether.

Die gegenüber Isocyanat reaktiven Verbindungen müssen so gewählt werden, daß ihre mittlere Funktionalität 2 nicht wesentlich überschreitet, wenn thermoplastisch verarbeitbare Polyurethanharnstoffelastomere hergestellt werden sollen. Wenn höherfunktionelle Verbindungen verwendet werden, muß daher durch Mitverwendung monofunktioneller Verbindungen die Gesamtfunktionalität auf ca. 2 vermindert werden.

Die relativen Mengen der Verbindungen (B1), (B2) und (B3) in (B) werden bevorzugt so gewählt, daß das Verhältnis der Summe der Isocyanatgruppen in (A) zu der Summe der zerewitinoffaktiven Wasserstoffatome in (B) 0,9:1 bis 1,2:1 beträgt.

Die erfindungsgemäßen thermoplastischen Polyurethanharnstoffelastomere können als (C) bevorzugt bis maximal 20 Gew.-% (bezogen auf die Gesamtmenge an thermoplastischem Polyurethanharnstoff) weiterer üblicher Hilfs- und Zusatzstoffe enthalten.

Dies sind u.a. an sich bekannte Katalysatoren, z.B. tertiäre Amine, wie Triethylamin, N-Methylmorpholin, N-Ethylmorpholin, N,N,N',N'-Tetramethylenethylendiamin, Pentamethyldiethylentriamin, 1,4-Diazabicyclo[2.2.2]octan, N-Methyl-N'-dimethylaminoethylpiperazine (DE-OS 2 636 787), N,N-Dimethylbenzylamin, N,N-Dimethylcyclohexylamin, 2-Methylimidazol, monocyclische und bicyclische Amidine (DE-OS 1 720 633), Bis-(dialkylamino)alkylether (US-PS 3 330 782, DE-AS 1 030 558, DE-OS 1 804 361, 2 618 280) sowie Amidgruppen (vorzugsweise Formamidgruppen aufweisende tertiäre Amine gemäß DE-OS 2 523 633 und 2 732 292). Als Katalysatoren können auch weitere organische Metallverbindungen, insbesondere organische Zinnverbindungen, verwendet werden. Als organische Zinnverbindungen kommen neben schwefelhaltigen Verbindungen wie Di-n-octylzinnmercaptid (DE-AS 1 769 367, US-PS 3 645 927) vorzugsweise Zinn(II)-salze von Carbonsäuren wie Zinn(II)acetat, Zinn(II)octoat und Zinn(II)laurat sowie Zinn(IV)-Verbindungen, wie z.B. Dibutylzinnoxid, Dibutylzinndilaurat oder Dioctylzinndiacetat in Betracht. In Betracht kommen weiterhin: Titan-, Bismuth- und Antimonverbindungen wie z.B. Antimontriisopropoxid, Antimonoctoat, Antimontallat, Bismuthsalze von Carbonsäuren mit 2 bis 20 Kohlenstoffatomen wie z.B. Bismuthtrioctanoat, Dibutylbismuthoctanoat, Triphenylbismuthdidecanoat und Dibutyltitanbis(acetylacetonat).

Weitere verwendbare Katalysatoren sowie Einzelheiten über die Wirkungsweise der Katalysatoren sind im Kunststoff-Handbuch Band VII, "Polyurethane", herausgegeben von Vieweg und Höchtlen, Carl-Hanser-Verlag, München 1966, z.B. auf den Seiten 96 bis 102, beschrieben.

Die Gesamtmenge an Katalysatoren in den erfindungsgemäßen Polyurethanharnstoffelastomeren beträgt in der Regel etwa 0 bis 5 Gew.-%, bevorzugt 0 bis 2 Gew.-%, bezogen auf die Gesamtmenge an Polyurethanharnstoffelastomer.

Weitere Zusatz- und Hilfsstoffe sind z.B.: Pigmente, Farbstoffe, Flammschutzmittel wie Tris(chlorethyl)phosphat, Trikresylphosphat oder Ammoniumphosphat und -pyrophosphat, Stabilisatoren gegen Alterungs- und Witterungseinflüsse, Weichmacher, Gleit- und Entformungsmittel, fungistatisch und bakteriostatisch wirkende Substanzen sowie Füllstoffe wie Calciumcarbonat, Kieselgel, Bariumsulfat, Calciumsulfat, Kaolin, Bentonit, Zeolithe, gemahlenes Glas, Glaskugeln, Glas-, Kunststoff- oder Kohlefasern, Quarzsand oder Quarzmehl, Siliciumcarbid, Aluminiumtrihydrat, Kreide, Dolomit oder Mischungen hiervon.

Die Ausgangsverbindungen (A), (B) und (C) werden in der ersten Stufe des Verfahrens in einem Statikmischer unter Bedingungen gemischt, bei denen keine Reaktion zwischen (A) und (B) eintritt. Es ist allerdings zulässig, daß bis zu 10 Gew.-%, bevorzugt bis zu 5 Gew.-% der in der reaktiven Mischung vorhandenen Isocyanatgruppen reagieren.

Die Isocyanate (A) können als monomere Di- oder Polyisocyanate, bevorzugt aber als Vorpolymere eingesetzt werden. Vorpolymere können hergestellt werden, indem man die Gesamtmenge oder einen Teil von (A) mit der Gesamtmenge oder einem Teil der Verbindungen (B1) gegebenenfalls in Anwesenheit der Zusatz- und Hilfsstoffe (C) bei 30 bis 220°C, bevorzugt 60 bis 180°C, besonders bevorzugt 100 bis 160°C, umsetzt. Die Herstellung von isocyanathaltigen Vorpolymeren, ihre Aufarbeitung und Verwendung ist prinzipiell bekannt (s. z.B. Methoden der Organischen Chemie (Houben-Weyl), Bd. E 20, G. Thieme Verlag, Stuttgart, New York, 1987, S. 1613-1617). Die Vorpolymeren können diskontinuierlich, beispielsweise in einem Rührkessel, oder kontinuierlich, z.B. nach den in DE-A-0 571 828 oder EP-A-0 571 831 beschriebenen Verfahren hergestellt werden.

Das Gemisch, welches den ersten Statikmischer verläßt, wird durch einen zweiten Statikmischer unter Bedingungen geführt, bei denen die Reaktion zwischen (A) und (B) stattfindet. Hierbei ist bevorzugt, daß die Isocyanatgruppen im reaktiven Gemisch zu mindestens 30 Gew.-%, bevorzugt zu mindestens 60 Gew.-%, besonders bevorzugt zu mindestens 90 Gew.-%, umgesetzt wurden. Der Umsatz hängt vorwiegend von der Temperatur des zweiten Statikmischers und der Verweilzeit des reaktiven Gemisches im zweiten Statikmischer ab. Mit steigender Temperatur und steigender Verweilzeit steigt der Umsatz. Die Bestimmung des Umsatzes beim Verlassen des Statikmischers ist durch titrimetrische Bestimmung möglich, z.B. durch Umsetzung der Isocyanatgruppen mit einer überschüssigen Menge Di-n-butylamin und Rücktitration mit Salzsäure.

Erfindungsgemäß können für beide Reaktionsstufen Statikmischer eingesetzt werden, wie sie in Chem.-Ing.-Techn. 52, Nr. 4, auf den Seiten 285 bis 291 sowie in "Mischen von Kunststoff und Kautschukprodukten", VDI-Verlag, Düsseldorf 1993, beschrieben sind.

Bevorzugt sind Statikmischer vom Typ SMX der Firma Sulzer Chemtech, Winterthur, Schweiz. Ebenfalls bevorzugt wird zum Mischen ein Statikmischer eingesetzt, der eine Schergeschwindigkeit von >100 s⁻¹ aufweist, besonders bevorzugt von >500 s⁻¹ und zur Umsetzung ein Statikmischer, der eine Schergeschwindigkeit von <100 s⁻¹ aufweist, besonders bevorzugt von <10 s⁻¹. Zur schnellen Vermischung in (A) und (B) kann auch ein Strahlmischer eingesetzt werden.

Das thermoplastische Polyurethanharnstoff-Elastomer, welches den Statikmischer verläßt, kann gegebenenfalls weiter bearbeitet werden, z.B. durch Temperung des Polymers in Form von Platten und Blöcken, Zerkleinerung oder Granulierung in Shreddern oder Mühlen, Entgasung sowie Granulierung unter Aufschmelzen. Bevorzugt wird das Polymer durch ein Aggregat zur kontinuierlichen Entgasung und Strangbildung geführt. Bei diesem Aggregat kann es sich z.B. um eine Mehrwellenschneckenmaschine handeln, die mit keinen oder nur wenigen Knetelementen bestückt ist.

Die nach dem erfindungsgemäßen Verfahren hergestellten thermoplastischen Polyurethanharnstoffelastomeren haben deutlich bessere mechanische und thermische Eigenschaften als vergleichbare Polymere, die nach Verfahren des Standes der Technik hergestellt wurden. Dies gilt vor allem für ihre elastischen Eigenschaften wie Zugdehnung und Zugfestigkeit, und thermischen Eigenschaften wie Wärmestand. Die erfindungsgemäßen thermoplastischen Polyurethanharnstoffelastomere können auf übliche Weise zu Formteilen verarbeitet werden.

### Beispiel 1

### Herstellung des Pre-Polymers 1

Man entwässert in einem 6 l Dreihalskolben mit mechanischer Rührung, Innenthermometer und Stickstoffeinlaß 4000 g (4,0 Mol) Poly(oxytetramethylen)glykol mit einem mittleren Molekulargewicht von 1000 g/Mol 4 Stunden bei 140°C und einem Druck von 10 mbar. Der Inhalt wird auf 70°C gekühlt und 1500 g (6,0 Mol) 4,4'-Diphenylmethandiisocyanat zugegeben, nach 10 Minuten die Temperatur auf 100°C erhöht und 2 h bei 100°C nachgerührt. Man erhält ein Prepolymer mit einem titrierbaren Isocyanat-Gehalt von 2,52 %.

### Herstellung des thermoplastischen Polyurethan-Harnstoffes

Der Reaktor besteht aus zwei Statikmischern (SMX, Sulzer AG). Statikmischer 1 besitzt einen Druckmesser in 6 mm, eine Länge von 35 mm und eine Scherrate von 500 s⁻¹ . Statikmischer 2 besitzt einen Durchmesser von 34 mm, eine Länge von 270 mm, eine Scherrate von 3s⁻¹ und einen beheizbaren Mantel, der auf 180°C beheizt wird.

In den ersten Statikmischer werden 5000 g Prepolymer 1 und 65,5 g Wasser kontinuierlich je Stunde dosiert. Das aus Statikmischer 1 austretende Gemisch wird in Statikmischer 2 geführt. Die aus Statikmischer 2 austretende Polymerschmelze wird abgekühlt und 16 Stunden bei 110°C nachgeheizt. Das zerkleinerte Polymer wird zu Spritzgußplatten verarbeitet und die Eigenschaften der Spritzgußplatte bestimmt. Die hergestellten Probekörper sind wasserhell, homogen und vollkommen stippenfrei.

### Beispiel V1 (Vergleich; Extruderverfahren; nicht erfindungsgemäß)

In die Einspeisetrichter einer üblichen Schneckenmaschine werden 5000 g Prepolymer 1 und 65,5 g Wasser kontinuierlich je Stunde dosiert. Die Temperaturführung der verschiedenen Gehäuse ist wie folgt:

| Gehäuse | 1 | 2 | 3 | 4 | 5 | 6 | 7 | Düse |
|---|---|---|---|---|---|---|---|---|
| Temp. in °C | 180 | 200 | 220 | 220 | 200 | 190 | 180 | 190 |

Der Polymerstrang wird an der Düse abgenommen, durch ein Wasserbad geführt, granuliert und 16 Stunden bei 110°C nachgeheizt. Aus dem Granulat werden Spritzgußplatten hergestellt, deren Eigenschaften gemessen werden. Die hergestellten Probekörper sind trüb und enthalten grobe Einschlüsse in Form von Stippen und Knoten.

### Beispiel 3 (Bestimmung der Eigenschaften)

| Polymer aus Beispiel | Reißfestigkeit [MPa] | Reißdehnung [%] | Erweichungstemp. [°C] | Glastemperatur in [°C] | Härte Shore A |
|---|---|---|---|---|---|
| 1 | 33 | 656 | 185 | -53 | 71 |
| V1 | 19,2 | 600 | 110 | -40 | 68 |

Das Beispiel 1 zeigt, daß im Vergleich zum Vergleichsbeispiel durch das erfindungsgemäße Verfahren thermoplastische Polyurethanharnstoffelastomere erhalten werden, die deutlich verbesserte mechanische und thermische Eigenschaften aufweisen.

## Patentansprüche

1. Verfahren zur Herstellung von thermoplastischen Polyurethanharnstoffelastomeren, worin man ein oder mehrere Polyisocyanate (A) und eine zerewitinoffaktive Wasserstoffatome aufweisende Mischung (B) aus
1) 40 bis 85 Äquivalent-% (bezogen auf Isocyanatgruppen in (A)) einer oder mehrerer Verbindungen mit im Mittel mindestens 1,8 zerewitinoffaktiven Wasserstoffatomen und einem Molekulargewicht von 450 bis 10 000,
2) 10 bis 60 Aquivalent-% (bezogen auf Isocyanatgruppen in (A)) Wasser und
3) 0 bis 45 Äquivalent-% (bezogen auf Isocyanatgruppen in (A)) einer oder mehrerer Kettenverlängerungsmittel mit im Mittel mindestens 1,8 zerewitinoffaktiven Wasserstoffatomen und einem Molekulargewicht von 62 bis 400 sowie gegebenenfalls
4) 0 bis 20 Gew.-% (bezogen auf die Gesamtmenge an thermoplastischem Polyurethanharnstoff) weiterer üblicher Hilfs- und Zusatzstoffe (C),
in einem Statikmischer oder Strahlmischer unter Bedingungen homogen vermischt, bei denen keine Reaktion zwischen (A) und (B) eintritt und danach das Gemisch einem zweiten Statikmischer zuführt, in dem (A) und (B) miteinander reagieren.

2. Verfahren nach Anspruch 1, worin man
i) aus zumindest Teilen von (A) und (B1) gegebenenfalls in Anwesenheit von zumindest Teilen von (C) ein Vorpolymer herstellt und
ii) dieses Vorpolymer zusammen mit den restlichen Ausgangsstoffen (A), (B) und (C) in dem ersten Statikmischer oder Strahlmischer mischt und danach in dem zweiten Statikmischer umsetzt.

3. Verfahren nach Anspruch 1, in dem das thermoplastische Polyurethanharnstoffelastomer zusätzlich kontinuierlich entgast und in einen Strang umgeformt wird.

4. Thermoplastische Polyurethanharnstoffelastomere hergestellt nach Anspruch 1.

5. Verwendung der thermoplastischen Polyurethanharnstoffelastomere gemäß Anspruch 4 zur Herstellung von Formkörpern.

## Claims

1. Process for the production of thermoplastic polyurethaneurea elastomers, in which process one or more polyisocyanates (A) and a mixture (B) containing Zerewitinoff active hydrogen atoms prepared from
1) 40 to 85 equivalent-% (relative to isocyanate groups in (A)) of one or more compounds having an average of at least 1.8 Zerewitinoff active hydrogen atoms and a molecular weight of 450 to 10000,
2) 10 to 60 equivalent-% (relative to isocyanate groups in (A)) of water and
3) 0 to 45 equivalent-% (relative to isocyanate groups in (A)) of one or more chain extenders having an average of at least 1.8 Zerewitinoff active hydrogen atoms and a molecular weight of 62 to 400, optionally together with
4) 0 to 20 wt.% (relative to the total quantity of thermoplastic polyurethaneurea) of further conventional auxiliary substances and additives (C)
are homogeneously mixed in a static mixer or jet mixer under conditions in which no reaction occurs between (A) and (B) and the mixture is then passed into a second static mixer in which (A) and (B) react together.

2. Process according to claim 1, in which
i) a prepolymer is produced from at least a proportion of (A) and (B1), optionally in the presence of at least a proportion of (C) and
ii) this prepolymer is mixed with the remaining starting materials (A), (B) and (C) in the first static mixer or jet mixer and is then reacted in the second static mixer.

3. Process according to claim 1, in which the thermoplastic polyurethaneurea elastomer is additionally continuously degassed and shaped into a strand.

4. Thermoplastic polyurethaneurea elastomers produced according to claim 1.

5. Use of the thermoplastic polyurethaneurea elastomers according to claim 4 for the production of mouldings.

## Revendications

1. Procédé de préparation d'élastomères thermoplastiques de polyuréthanne-urée, dans lequel on mélange de manière homogène un ou plusieurs polyisocyanates (A) et un mélange (B) présentant des atomes d'hydrogène actifs selon Zerewitinoff, constitué de :
1) 40 à 85% en équivalents [sur base des radicaux isocyanates dans (A)] d'un ou plusieurs composés avec, en moyenne, au moins 1,8 atome d'hydrogène actif selon Zerewitinoff et un poids moléculaire allant de 450 à 10 000 ;
2) 10 à 60% en équivalents [sur base des radicaux isocyanates dans (A)] d'eau, et
3) 0 à 45% en équivalents [sur base des radicaux isocyanates dans (A)] d'un ou de plusieurs agents d'allongement de chaîne avec en moyenne au moins 1,8 atome d'hydrogène actif selon Zerewitinoff et un poids moléculaire allant de 62 à 400, ainsi que facultativement,
4)0 à 20% en poids (sur base de la quantité totale de polyuréthanne-urée thermoplastique) d'autres auxiliaires ou additifs usuels (C),
dans un mélangeur statique ou un mélangeur à veine, dans des conditions au cours desquelles aucune réaction ne se produit entre (A) et (B) et ensuite, le mélange est amené dans un deuxième mélangeur statique dans lequel (A) et (B) réagissent l'un avec l'autre.

2. Procédé suivant la revendication 1, dans lequel on :
i)prépare un prépolymère à partir d'au moins une partie de (A) et de (B1), facultativement en présence d'au moins une partie de (C), et
ii)on fait réagir ce prépolymère avec les matières de départ restantes (A), (B) et (C) dans un premier mélangeur statique ou un mélangeur à veine, et ensuite, on fait réagir dans un deuxième mélangeur statique.

3. Procédé suivant la revendication 1, dans lequel l'élastomère thermoplastique de polyuréthanne-urée est dégazé, en outre, de manière continue et formé en un brin.

4. Elastomère thermoplastique de polyuréthanne-urée préparé suivant la revendication 1.

5. Utilisation de l'élastomère thermoplastique de polyuréthanne-urée suivant larevendication 4, pour la préparation d'articles moulés.
